# EUROPEAN PATENT APPLICATION

(11) **EP 2 940 644 A1**
(43) Date of publication of application: **04.11.2015**
(21) Application number: 14200680.8
(22) Date of filing: 30.12.2014
(51) Int. Cl.: G06Q 30/02

(54) **Method, apparatus, device and system for inserting audio advertisement**

(30) Priority: 30.04.2014 CN 201410181968
(71) Applicant: Baidu Online Network Technology (Beijing) Co., Ltd, Beijing 100085 (CN)
(72) Inventor: Tian, Biao, Haidian District Beijing (CN); Zhang, Xu, Haidian District Beijing (CN); Xi, Ming, Haidian District Beijing (CN)
(74) Representative: Potter Clarkson LLP

(57) **Abstract**

The present invention provides a method, apparatus, device and system for inserting an audio ad. The present invention determines, according to feature information of audio into which an audio advertisement is inserted, an insertion time point of the audio advertisement when playing the audio, and executes an operation associated with the insertion of the audio advertisement at the insertion time point on a user equipment. The present invention enables an audio advertisement to be inserted into audio at a suitable time point to reduce the incongruity of the audio ad, so as to enhance the user experience. Furthermore, the present invention may rapidly update the advertisement contents in real time, so that a vast amount of Internet ads can be delivered quickly, so as to better satisfy both the user experience and revenue requirements.

## Description

### Technical field

The present invention relates to the technical field of computers, and in particular to a method, apparatus, device and system for inserting an audio advertisement.

### Background

In the prior art, Internet advertisements are mainly in the form of text, picture, video or link, and audio advertisements almost never appear. Moreover, in the prior art, when playing an advertisement, the advertisement is generally simply added to the head or tail of a video into which the advertisement is inserted. In this way, the appearance of the advertisement is rather incongruous, and it generally does not blend in the video environment, thus damaging the user experience. Furthermore, in this way, the advertisement contents cannot be updated in real time, and thus it is difficult to meet the demand for large-scale advertising.

### Summary

An objective of the present invention is to provide a method, apparatus, device and system for inserting an audio advertisement.

According to one aspect of the present invention, provided is a method for assisting a user equipment to insert an audio advertisement in a network device, wherein the method comprises the steps of:
a) determining, according to feature information of audio into which the audio advertisement is inserted, an insertion time point of the audio advertisement when playing the audio;
   wherein the method further comprises the steps of:
   i) providing to the user equipment the audio advertisement to be inserted in the audio, the insertion time point, and instruction information, wherein the instruction information is used for instructing the user equipment to execute an operation associated with the insertion of the audio advertisement at the insertion time point.

According to another aspect of the present invention, also provided is a method for inserting an advertisement in a user equipment, wherein the method comprises the steps of:
A) receiving an audio advertisement provided by a network device and to be inserted into audio being played, an insertion time point of the audio advertisement when playing the audio, and instruction information; and
B) executing an operation associated with the insertion of the audio advertisement at the insertion time point according to the instruction information.

According to another aspect of the present invention, also provided is an auxiliary apparatus for assisting a user equipment to insert an audio advertisement in a network device, wherein the auxiliary apparatus comprises:
a first determination means for determining, according to feature information of audio into which the audio advertisement is inserted, an insertion time point of the audio advertisement when playing the audio; and
a provision means for providing to the user equipment the audio advertisement to be inserted in the audio, the insertion time point, and instruction information, wherein the instruction information is used for instructing the user equipment to execute an operation associated with the insertion of the audio advertisement at the insertion time point.

According to another aspect of the present invention, also provided is an insertion apparatus for inserting an advertisement in a user equipment, wherein the insertion apparatus comprises:
a receiving means for receiving an audio advertisement provided by a network device and to be inserted into audio being played, an insertion time point of the audio advertisement when playing the audio, and instruction information; and
an execution means for executing an operation associated with the insertion of the audio advertisement at the insertion time point according to the instruction information.

Compared with the prior art, the present invention has the following advantages: 1) it provides an audio advertisement insertion solution, so that an audio advertisement can be inserted into audio at a suitable time point to reduce the incongruity of the audio ad, so as to enhance the user experience; 2) the present invention chooses to pause the playback of the original audio when the audio advertisement is inserted, rather than writing the audio advertisement into the audio, so that the audio advertisement can be played normally without modifying the original audio; furthermore, in this way, it is very simple to alter audio advertisements to better adapt to the needs of frequent alternation of audio advertisements (e.g., the inserted audio advertisements may be different for the same audio only after 5 minutes); 3) the present invention can provide the possibility of properly inserting audio advertisements in the case of live broadcast; and 4) audio advertisements may be selected according to advertisement insertion relevant information of the audio into which audio advertisements need to be inserted, so that the inserted audio advertisement is more congruous with the audio to further enhance the user experience.

### Description of the accompanying drawings

Through reading the detailed depiction hereinafter on the non-limiting embodiments with reference to the accompanying drawings, the other features, objectives, and advantages of the present invention will become more apparent:
Fig. 1 is a flowchart of a method for inserting an audio advertisement according to an embodiment of the present invention;
Fig. 2 is a flowchart of a method for inserting an audio advertisement according to another embodiment of the present invention;
Fig. 3 is a flowchart of a method for inserting an audio advertisement according to another embodiment of the present invention;
Fig. 4 is a structural schematic diagram of a system for inserting an audio advertisement according to an embodiment of the present invention;
Fig. 5 is a structural schematic diagram of a system for inserting an audio advertisement according to another embodiment of the present invention; and
Fig. 6 is a structural schematic diagram of a system for inserting an audio advertisement according to another embodiment of the present invention.

The same or similar reference numerals in the accompanying drawings indicate the same or similar components.

### Detailed description of the embodiments

Hereinafter, the present invention will be further described in detail in conjunction with the accompanying drawings.

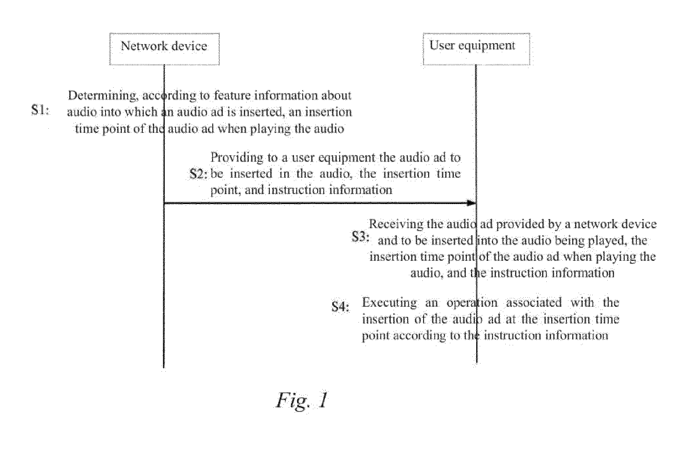

Fig. 1 is a flowchart of a method for inserting an audio advertisement according to an embodiment of the present invention.

The method of this embodiment is implemented mainly through a network device and a user equipment. The network device comprises but is not limited to a single network server, a server group composed of a plurality of network servers, or a cloud composed of a large number of computers or network servers based on cloud computing, wherein cloud computing is one kind of distributed computing, which is a super virtual computer formed by a cluster of computer sets loosely coupled. The user equipment comprises but is not limited to a PC, a tablet computer, a smart phone, a PDA, an IPTV, or any intelligent device capable of implementing the method of the present invention. The network where the network device and the user equipment are located comprises but is not limited to Internet, a Wide Area Network, a Metropolitan Area Network, a Local Area Network, a VPN network, etc.

It shall be noted that the user equipment, the network device and the network are merely examples, and other existing or future possibly emerging computing devices or networks, if applicable to the present invention, shall also be included within the scope of protection of the present invention incorporated herein by reference.

The method according to this embodiment comprises the following steps S1, S2, S3 and S4.

In step S1, a network device determines, according to feature information of an audio advertisement to be inserted and feature information of audio into which the audio advertisement is inserted, an insertion time point of the audio advertisement when playing the audio.

The audio and the feature information thereof will be described below first.

The audio comprises any sound network resources; for example, the audio may comprise music and song, cross talk, storytelling, a chat show, etc. Moreover, the audio may be a live audio or a non-live audio; for example, the audio may be a chat show on air, or a pre-recorded song, etc.

It shall be noted that, if the audio is a live audio, step S1 is generally executed in real time during the playback of the live audio; and if the audio is not a live audio, step S1 may be executed in real time when the audio is provided to the user equipment and played, or may be executed before the user equipment plays the audio.

The feature information of the audio comprises any information capable of reflecting the features of the audio. Preferably, the feature information of the audio comprises at least one of the following:

### 1) Inherent data feature information of the audio.

The inherent data feature information of the audio indicates the features which can be manifested directly by the data of the audio. For example, the inherent data feature information of the audio may comprise but is not limited to audio volume, amplitude change, zero-crossing rate, MFCC, intensity, spectral analysis result, etc.

The inherent data feature information of the audio may be obtained by analyzing the data of the audio.

### 2) Human feature information of the audio.

The human feature information of the audio can indicate the understanding or definition of the audio by human beings. For example, the human feature information of the audio comprises but is not limited to an emotion expressed by the audio (e.g., happiness, pain, or depression), an art classification to which the audio belongs (e.g., cross talk, storytelling, or song), and a language region classification to which the audio belongs (e.g., English, Cantonese, or other dialects).

The human feature information of the audio may be obtained by manual annotation, or by analyzing the data of the audio.

It shall be noted that, as a preferred solution, before step S1, the network device may determine the data feature information of the audio according to the audio, and determine the human feature information of the audio according to the data feature information.

For example, the network device analyzes the data of the audio first to obtain the data feature information, such as the volume, amplitude change, zero-crossing rate, MFCC, intensity, and spectral analysis result of the audio, and then the network device inputs the obtained data feature information into a pre-trained classifier to obtain the human feature information, such as the emotion expressed by the audio and the art classification. One or more classification models may be trained using a large amount of audio annotated with human feature information to obtain the pre-trained classifier.

It shall be noted that, the examples above are merely used for illustrating the technical solutions of the present invention rather than limiting same, and those skilled in the art shall understand that any implementation for obtaining feature information of audio shall be included in the scope of the present invention.

The specific implementation of step S1 will be described below.

Specifically, the method of the network device determining, according to feature information of audio into which the audio advertisement is inserted, an insertion time point of the audio advertisement when playing the audio comprises but is not limited to:

1) the network device determines, merely according to feature information of audio into which the audio advertisement is inserted, an insertion time point of the audio advertisement when playing the audio.

For example, the feature information of the audio indicates that the art classification to which the audio belongs is news, then the network device selects an earlier time point in the audio as the insertion time point according to the situation where the art classification of the audio is news, etc.

As another example, if the audio is a live audio, the network device determines that the current time point is the insertion time point according to the situation where it is analyzed that the intensity of the audio suddenly increases twice in the live audio (in live broadcast, it may indicate that elated mood of users, such as applauding or loud cheering, appears twice) up to the current time point.

Preferably, the network device selects, merely according to feature information of audio into which the audio advertisement is inserted, a time point at which feature information corresponding to adjacent time periods in the audio matches a predetermined insertion condition as the insertion time point of the audio advertisement when playing the audio. The adjacent time periods may comprise a time period before or after a time point.

For example, the predetermined insertion condition comprises: the change in amplitude of the waveform of the audio is smaller than a predetermined threshold in 15s before a time point. When the network device analyzes that the change in amplitude of the waveform is smaller than the predetermined threshold in 15s before a time point in the audio, this time point is used as the insertion time point of the audio advertisement when playing the audio. In this example, the predetermined insertion condition may also be defined to adjust the selection of the insertion time point according to the human feature information of the audio, e.g., the insertion time point of news audio may be earlier, the insertion time point of cross talk audio may be later, etc.

It shall be noted that, in this implementation, if the audio is not a live audio, the network device may execute the solution of implementation 1) before or after providing the audio to the user equipment, or before or after knowing that the user equipment is playing the audio, that is, if the audio is not a live audio, the solution of implementation 1) may be executed off-line or may be executed in real time when the audio is played in the user equipment. If the audio is a live audio, implementation 1) generally needs to be executed in real time, and step S1 may further comprise: the network device judging whether it is suitable to insert the audio advertisement according to feature information of the live audio obtained by means of real-time analysis up to the current time point, and if it is judged that it is suitable to insert the audio ad, using the current time point or a proximate time point after the current time point as the insertion time point.

The proximate time point is a time point which is after the current time point and proximate to the current time point. This proximate time point may be obtained by adding the current time point and a length of time, and this length of time may be predetermined, or may be determined by estimating network delay according to the network condition between the network device and the user equipment. Through this proximate time point, the possibility that the insertion time point has passed due to factors such as network delay when the user equipment receives the insertion time point sent by the network device in step S2 can be reduced as much as possible.

The step of the network device judging whether it is suitable to insert the audio advertisement according to feature information of the live audio obtained by means of real-time analysis up to the current time point can be executed repeatedly during the live broadcast of the audio until it is judged that it is suitable to insert the audio advertisement currently and a predetermined number of times of inserting the audio advertisement in the audio has been reached, or the live broadcast of the audio is finished, and the step of the network device judging whether it is suitable to insert the audio advertisement according to feature information of the live audio obtained by means of real-time analysis up to the current time point is the same as or similar to the method as mentioned above of determining, merely according to feature information of audio into which the audio advertisement is inserted, an insertion time point of the audio advertisement when playing the audio, so will not be described here.
2) The network device determines an insertion time point of the audio advertisement when playing the audio according to the feature information of the audio in combination with feature information of the audio advertisement and/or user attribute information of a user preferring the audio.

The audio advertisement comprises any advertisement which can be inserted into the audio and is manifested in the form of sound. The feature information of the audio advertisement comprises any information capable of reflecting the features of the audio ad. Preferably, the feature information of the audio advertisement comprises but is not limited to: inherent data feature information of the audio ad; human feature information of the audio advertisement and so on. The feature information of the audio advertisement is the same as or similar to the feature information of the audio, and the method for obtaining the feature information of the audio advertisement is the same as or similar to that for obtaining the feature information of the audio, so will not be described here.

The user attribute information of the user comprises any information capable of reflecting user attributes. Preferably, the user attribute information comprises but is not limited to: a) individual information of the user, comprising but not limited to gender, age, education level, etc. of the user; b) environment information of the current location of the user, comprising but not limited to time information of the user location, user location information, etc.; and c) an audio listening history of the user, this history comprising but not limited to the number of times the user listens the audio in history, the list of audio heard, and information of the environment for listening to the audio. The user individual information in the user attribute information may be provided actively by the user or obtained after identifying user identity according to user identification information, and the user identification information may comprise but not limited to login information of the user, identification information of a user equipment used by the user, etc.; the environment information of the current location of the user in the user attribute information may be provided by the user equipment or inferred according to current address information of the user; and the audio listening history in the user attribute information may be obtained after identifying the user identity according to the identification information of the user.

The user attribute information of the user preferring the audio may be obtained according to the user attribute information of the user listening to the audio historically. Preferably, an audio and user attribute model may be established according to the feature information of the audio and the user attribute information of the user listening to the audio historically, so as to establish an association between the audio and the user, so that a computer can query a user group at which an audio aims. For example, one entry in the audio and user attribute model may comprise: an audio identifier; an audio format-high bit rate aac; an art type-cross talk; a playback time-at noon; and a playback range-office building.

Specifically, the method of the network device determining an insertion time point of the audio advertisement when playing the audio according to the feature information of the audio in combination with feature information of the audio advertisement and/or user attribute information of a user preferring the audio comprises but is not limited to:
a) the network device selects, merely according to feature information of an audio advertisement to be inserted and the feature information of the audio into which the audio advertisements is inserted, a time point at which feature information corresponding to an adjacent time period in the audio highly matches the feature information of the audio advertisement as the insertion time point of the audio advertisement when playing the audio.

For example, if the feature information of the audio advertisement indicates that it is a soothing music, and the network device determines that the audio is a soothing music one minute before and after 8:45, the time point of the audio, according to the feature information of the audio, then the network device uses the time point 8:45 as the insertion time point of the audio advertisement when playing the audio.
b) The network device determines the insertion time point of the audio advertisement when playing the audio merely according to the feature information of the audio advertisement to be inserted and the user attribute information of the user preferring the audio.

For example, the network device first selects, in the audio, a time range within which an audio advertisement may be inserted according to the user attribute information, and then determines the insertion time point within the selected time range according to the feature information of the audio. If the average length of time of the audio being listened to by the user recorded in the user attribute information is 7:18 seconds, the network device first determines that the time range in the audio within which the audio advertisement may be inserted is 0:00-7:18, and then determines the insertion time point within the selected time range according to the feature information of the audio.

As another example, the network device first determines the time range in the audio within which the audio advertisement may be inserted according to the feature information of the audio, and then selects the insertion time point within the determined time range according to the user attribute information. For example, the network device first determines a time range in the audio to which an audio portion having a volume lower than a predetermined volume threshold corresponds according to the feature information of the audio, and then judges that the user is in rush hour according to the current time information and location information of the user, so as to select an earlier time point from the determined time range as the insertion time point.
c) The network device determines the insertion time point of the audio advertisement when playing the audio according to the feature information of the audio, the feature information of the audio ad, and the user attribute information of the user preferring the audio.

For example, the network device determines the time range in the audio which matches the audio advertisement and corresponding to the audio portion into which the audio advertisement can be inserted according to the feature information of the audio and the feature information of the audio ad, and then selects the insertion time point from the determined time range according to the user attribute information.

As another example, the network device determines the time range in the audio within which the audio advertisement may be inserted according to the feature information of the audio and the user attribute information, and then selects the insertion time point from the determined time range according to the feature information of the audio ad.

It shall be noted that, similar to implementation 1), if the audio is not a live audio, the network device may execute the solution of implementation 2) before or after providing the audio to the user equipment, or before or after knowing that the user equipment is playing the audio, that is, if the audio is not a live audio, the solution of implementation 2) may be executed off-line or may be executed in real time when the audio is played in the user equipment. If the audio is a live audio, implementation 2) generally needs to be executed in real time, and step S1 may further comprise: the network device judging whether it is suitable to insert the audio advertisement according to feature information of the live audio obtained by means of real-time analysis up to the current time point in combination with the feature information of the audio advertisement and/or the user attribute information of the user preferring the audio; and if it is judged that it is suitable to insert the audio ad, using the current time point or a proximate time point after the current time point as the insertion time point.

It shall be noted that, the examples above are merely used for illustrating the technical solutions of the present invention rather than limiting same, and those skilled in the art shall understand that any implementation for determining the insertion time point of the audio advertisement when playing the audio according to the feature information of the audio into which the audio advertisement is inserted shall be included in the scope of the present invention.

In step S2, the network device provides to the user equipment the audio advertisement to be inserted in the audio, the insertion time point of the audio advertisement in the audio, and the instruction information, wherein the instruction information is used for instructing the user equipment to execute an operation associated with the insertion of the audio advertisement at the insertion time point.

The method of the network device providing the audio advertisement to the user equipment comprises but is not limited to: 1) the network device directly provides content information of the audio advertisement to the user equipment; and 2) the network device provides download link information of the audio advertisement to the user equipment, so as to allow the user equipment to download the audio ad.

Preferably, the operation associated with the insertion of the audio advertisement at the insertion time point comprises but is not limited to: 1) pausing the playback of the audio when the insertion time point is reached, and inserting the audio ad; and 2) displaying to the user prompt information that an audio advertisement can be inserted currently.

The instruction information sent by the network device is different according to different cases. Specifically:
1) in the case that the audio needs to be played in the user equipment, the instruction information is used for instructing the user equipment to pause the playback of the audio when the insertion time point is reached and insert the audio ad.

Preferably, in this case, when step S2 is executed, the audio may be played in the user equipment. Preferably, in this case, the user using the user equipment is generally the user to whom the audio advertisement is delivered. Furthermore, the instruction information may also further instruct the user equipment to resume playing the audio after the insertion of the audio advertisement is finished.
2) If the audio is a live audio, the instruction information is used for instructing the user equipment to display to the user prompt information that an audio advertisement can be inserted currently.

Preferably, in this case, the user using the user equipment is generally the live audio maker, comprising any staff involved in making this audio in real time and providing same to the public. Preferably, the maker comprises but is not limited to: the host for the live audio, the backstage crews for the live audio, etc.

It shall be noted that, in step S2, the audio may also be provided to the user equipment at the same time. Alternatively, preferably, the audio is provided to the user equipment or played in the user equipment before step S2; or when the audio is a live audio, this audio may be being recorded currently by the user using the user equipment.

It shall be noted that, there may be a long interval between step S1 and step S2; and for example, if the audio is not a live audio, the network device may first execute step S1 and determine the insertion time point, and then after a period of time, when a request to play the audio is received from the user equipment or a notification of the audio being already played in the user equipment provided by another device is received, then step S2 is executed. That is, in this case, step S1 is executed off-line. Alternatively, after step S 1 is executed, step S2 is executed immediately; and for example, the network device executes step S1 after providing the audio to the user equipment or knowing that the user equipment is playing the audio, and then executes step S2 immediately. That is, in this case, step S 1 is executed in real time.

The audio ad, insertion time point and instruction information provided by the network device reach the user equipment via a network.

In step S3, the user equipment receives the audio advertisement provided by the network device and to be inserted into the audio being played, the insertion time point of the audio advertisement when playing the audio, and the instruction information.

The audio being played may comprise: 1) audio being played in the user equipment or to be played in the user equipment; and 2) an audio being recorded by a maker using the user equipment and played for the public.

The method of the user equipment receiving the audio advertisement provided by the network device comprises but is not limited to: 1) the user equipment directly receiving content information of the audio advertisement provided by the network device; and 2) the user equipment receiving download link information of the audio advertisement provided by the network device and downloading the audio ad.

Then, in step S4, the user equipment executes an operation associated with the insertion of the audio advertisement at the insertion time point according to the instruction information.

The user equipment executes corresponding different operations according to different instruction information sent by the network device in different cases.

### Specifically:

1) In the case that the audio is being played in the user equipment, the instruction information sent from the network device is used for instructing the user equipment to pause the playback of the audio when the insertion time point is reached and insert the audio ad, and then the user equipment pauses the playback of the audio when the insertion time point is reached and inserts the audio advertisement according to the instruction information.

Preferably, in this case, if the audio is provided to the user equipment before step S2, the user equipment may execute the step of acquiring and playing content information of the audio before step S3. The audio may be provided to the user equipment by the network device or another device, and the method for providing the audio can be the same as or similar to the method for providing the audio ad, so will not be described here.
2) In the case that the audio is a live audio, the instruction information is used for instructing the user equipment to display for the user prompt information that an audio advertisement can be inserted currently, and then the user equipment displays for the user prompt information that an audio advertisement can be inserted currently at the insertion point or after the insertion point according to the instruction information.

The case of displaying for the user, after the insertion time point, prompt information that an audio advertisement can be inserted currently may be generally caused by the case that the insertion time point has passed when the user equipment receives the information in step S3 due to factors such as network delay. In this case, the user equipment may immediately execute the operation of displaying for the user prompt information that an audio advertisement can be inserted currently after receiving the information in step S3.

Preferably, in this case, when the user confirms insertion of the ad, the user equipment pauses the playback of the audio, and inserts the audio ad.

By means of the insertion solution of audio advertisements provided in this embodiment, an audio advertisement can be inserted into audio at a suitable time point to reduce the incongruity of the audio ad, so as to enhance the user experience; moreover, this embodiment chooses to pause the playback of the original audio when the audio advertisement is inserted, rather than writing the audio advertisement into the audio, so that the audio advertisement can be played normally without modifying the original audio; furthermore, in this way, it is very simple to alter audio advertisements to better adapt to the needs of frequent alternation of audio advertisements (e.g., the inserted audio advertisements may be different for the same audio only after 5 minutes); furthermore, the solution of this embodiment can also provide the possibility of properly inserting audio advertisements in the case of live broadcast.

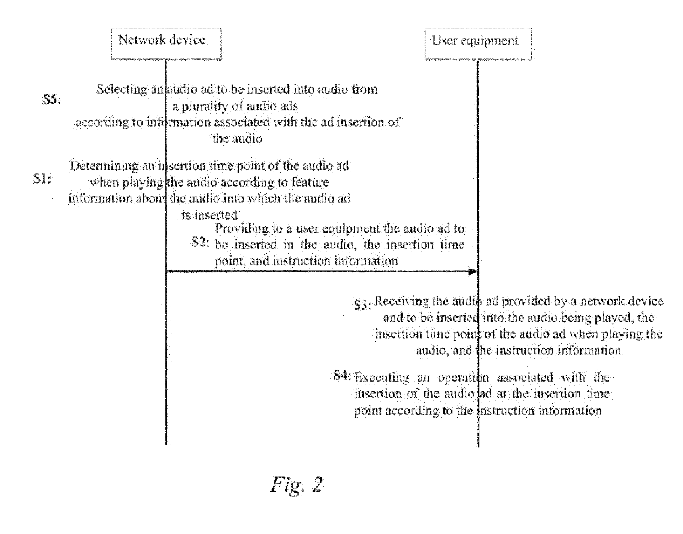

Fig. 2 is a flowchart of a method for inserting an audio advertisement according to another embodiment of the present invention. The method of this embodiment comprises step S5, step S1, step S2, step S3 and step S4. Step S1, step S2, step S3 and step S4 are described in detail with reference to the embodiment as shown in Fig. 1, so will not be described here.

Step S5 is executed before step S1. In step S5, the network device selects, according to information associated with the advertisement insertion of audio into which an audio advertisement needs to be inserted, an audio advertisement to be inserted into the audio from a plurality of audio ads.

The information associated with the advertisement insertion of the audio comprises any information associated with the audio and involving the insertion of the audio advertisement in the audio. Preferably, the information associated with the advertisement insertion of the audio comprises but is not limited to:

### 1) the number of ads allowed to be inserted in the audio.

When the information associated with the advertisement insertion of the audio comprises the number of ads allowed to be inserted in the audio, the network device may randomly select, from a plurality of audio ads, audio advertisements in a number not exceeding the number of the ads allowed to be inserted, or randomly select, from a plurality of audio ads, audio advertisements in a number not exceeding the number of the ads allowed to be inserted according to sorting of the audio ads.

### 2) Audio playback environment.

The playback environment of the audio comprises but is not limited to the playback time period of the audio and the coverage when playing the audio and so on.

When the information associated with the advertisement insertion of the audio comprises the playback environment of the audio, the network device may match the audio playback environment with the environment of the location or possible location of a user at whom a plurality audio advertisements aim, so as to select, from the plurality of audio ads, an audio advertisement aiming at the user located in the environment highly matching the audio playback environment.

For example, if the audio playback environment comprises playing in an office building, the network device may select, from a plurality of audio ads, an audio advertisement aiming at a user in an office building or a user possibly working in an office building (e.g., a user working on paperwork), etc.

### 3) User attribute information of a user preferring the audio.

When the information associated with the advertisement insertion of the audio comprises user attribute information of a user preferring the audio, the network device may match the user attribute information of the user preferring the audio with user attribute information of a user at whom a plurality of audio advertisements aim, so as to select, from the plurality of audio ads, an audio advertisement aiming at a user highly matching the user preferring the audio.

For example, if most of the users preferring the audio are male, the network device may select, from a plurality of audio ads, an audio advertisement aiming at men.

Preferably, the network device may obtain the user attribute information of the user preferring the audio through an established audio and user attribute model.

It shall be noted that, when the information associated with the advertisement insertion of the audio comprises a plurality of pieces of information, the network device may synthesize the plurality of pieces of information to select an audio advertisement from a plurality of audio ads. For example, if the number of ads allowed to be inserted in the audio is 2, the audio playback environment comprises playing in an office building, and most of the users preferring the audio are male, the network device selects, from a plurality of audio ads, two audio advertisements aiming at male users working in an office building or possibly working in an office building.

It shall be noted that, the examples above are merely used for illustrating the technical solutions of the present invention rather than limiting same, and those skilled in the art shall understand that any implementation of selecting, from a plurality of audio ads, an audio advertisement to be inserted into an audio according to information associated with the advertisement insertion of the audio advertisement to be inserted into the audio shall be included in the scope of the present invention.

In this embodiment, the audio advertisements may be selected according to information associated with the advertisement insertion of the audio advertisement to be inserted into the audio, so that the inserted audio advertisement is more congruous with the audio to further enhance the user experience.

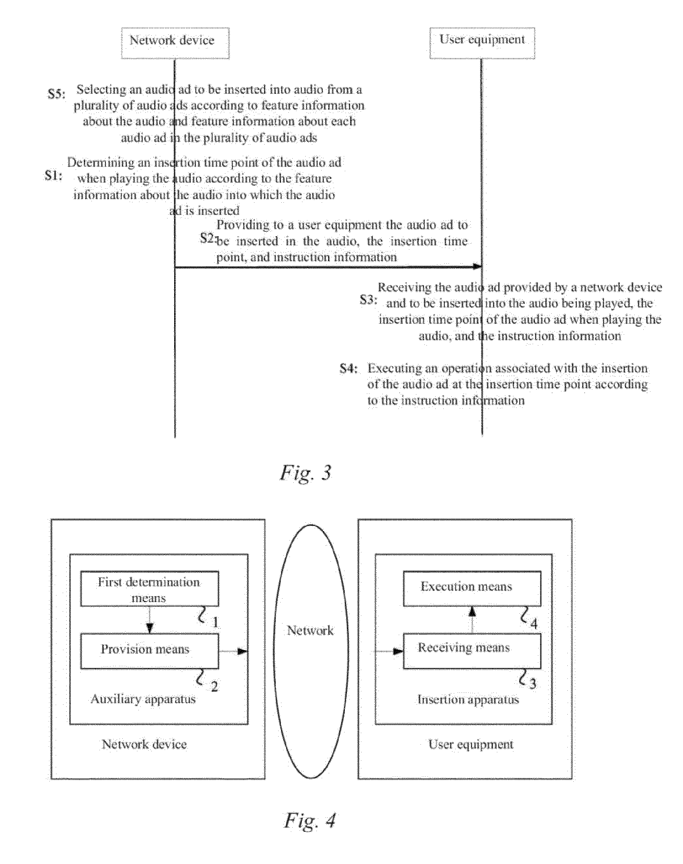

Fig. 3 is a flowchart of a method for inserting an audio advertisement according to another embodiment of the present invention. The method of this embodiment comprises step S6, step S1, step S2, step S3 and step S4. Step S1, step S2, step S3 and step S4 are described in detail with reference to the embodiment as shown in Fig. 1, so will not be described here.

Step S6 is executed before step S1. In step S6, the network device selects, from a plurality of audio ads, an audio advertisement to be inserted into an audio according to feature information of the audio and feature information of each audio advertisement in the plurality of audio ads.

Specifically, the network device selects, from a plurality of audio ads, an audio advertisement highly matching the audio as an audio advertisement to be inserted into the audio according to feature information of the audio and feature information of each audio advertisement in the plurality of audio ads.

The network device may select an audio advertisement with feature information highly matching feature information of the whole audio, or may select an audio advertisement with feature information highly matching with feature information of part of the audio.

In this embodiment, an audio advertisement may be selected in combination with feature information of an audio and the audio ad, so that the inserted audio advertisement is more congruous with the audio to further enhance the user experience.

It shall be noted that, step S5 with reference to the embodiment as shown in Fig. 2 may be combined with step S6 with reference to the embodiment as shown in Fig. 3. That is, the network device may select, from a plurality of audio ads, an audio advertisement to be inserted into the audio according to information associated with the advertisement insertion of the audio in combination with the feature information of the audio and feature information of each audio advertisement in the plurality of audio ads.

For example, if the number of ads allowed to be inserted in the audio is 2, the playback environment of the audio comprises playing in an office building, most of the users preferring the audio are male, and the feature information of the audio reflects a small change in amplitude of the waveform of the audio, the network device selects, from a plurality of audio ads, two audio advertisements which aim at male users working in an office building or possibly working in an office building and having a small change in amplitude of the waveform, etc.

Fig. 4 is a structural schematic diagram of a system for inserting an audio advertisement according to an embodiment of the present invention. The system of this embodiment comprises a network device and a user equipment, wherein the network device comprises an auxiliary apparatus which comprises a first determination means 1 and a provision means 2, and the user equipment comprises an insertion apparatus which comprises a receiving means 3 and an execution means 4.

The first determination means 1 in the network device determines, according to feature information of an audio advertisement to be inserted and feature information of audio into which the audio advertisement is inserted, an insertion time point of the audio advertisement when playing the audio.

The audio and the feature information thereof will be described below first.

The audio comprises any sound network resource, for example, the audio may comprise music and song, cross talk, storytelling, a chat show, etc. Moreover, the audio may be a live audio or a non-live audio, for example, the audio may be a chat show on air, or a pre-recorded song, etc.

It shall be noted that, if the audio is a live audio, the first determination means 1 generally executes an operation in real time during the playback of the live audio; and if the audio is not a live audio, the first determination means 1 may execute an operation in real time when the audio is provided to the user equipment and is playing, or may execute the operation before the user equipment plays the audio.

The feature information of the audio comprises any information capable of reflecting the features of the audio. Preferably, the feature information of the audio comprises at least one of the following:

### 1) Inherent data feature information of the audio.

The inherent data feature information of the audio indicates the features which can be manifested directly by the data of the audio. For example, the inherent data feature information of the audio may comprise but is not limited to audio volume, amplitude change, zero-crossing rate, MFCC, intensity, spectral analysis result, etc.

The inherent data feature information of the audio may be obtained by analyzing the data of the audio.

### 2) The human feature information of the audio.

The human feature information of the audio can indicate the understanding or definition of the audio by the human. For example, the human feature information of the audio comprises but is not limited to an emotion expressed by the audio (e.g., happiness, pain, or depression), an art classification to which the audio belongs (e.g., cross talk, storytelling, or song), and a language region classification to which the audio belongs (e.g., English, Cantonese, or other dialects).

The human feature information of the audio may be obtained by manual annotation, or by analyzing the data of the audio.

It shall be noted that, as a preferred solution, the auxiliary apparatus further comprises a second determination means (not shown in the figure) and a third determination means (not shown in the figure) for executing operations before the first determination means 1. The second determination means may determine data feature information of the audio according to the audio; and the third determination means determines human feature information of the audio according to the data feature information.

For example, the second determination means first analyzes the data of the audio to obtain the data feature information, such as the volume, amplitude change, zero-crossing rate, MFCC, intensity, and spectral analysis result of the audio; and then the third determination means inputs the obtained data feature information into a pre-trained classifier to obtain the human feature information, such as the emotion expressed by the audio and the art classification. One or more classification models may be trained using a large amount of audio annotated with the human feature information to obtain the pre-trained classifier.

It shall be noted that, the examples above are merely used for illustrating the technical solutions of the present invention rather than limiting same, and those skilled in the art shall understand that any implementation for obtaining feature information of audio shall be included in the scope of the present invention.

The specific implementation of the first determination means 1 will be described below.

Specifically, the method of the first determination means 1 determining the insertion time point of the audio advertisement when playing the audio according to the feature information of the audio into which the audio advertisement is inserted comprises but is not limited to:
1) the first determination means 1 determines, merely according to the feature information of the audio into which the audio advertisement is inserted, the insertion time point of the audio advertisement when playing the audio.

For example, the feature information of the audio indicates that the art classification to which the audio belongs is news, then the first determination means 1 selects an earlier time point in the audio as the insertion time point according to the situation where the art classification of the audio is news, etc.

As another example, if the audio is a live audio, the first determination means 1 determines that the current time point is the insertion time point according to the situation where it is analyzed that the intensity of the audio suddenly increases twice in the live audio (in live broadcast, it may indicate that elated mood of users, such as applauding or loud cheering, appears twice) up to the current time point.

Preferably, the first determination means 1 selects, merely according to the feature information of the audio into which the audio advertisement is inserted, a time point at which feature information corresponding to an adjacent time period in the audio matches a predetermined insertion condition as the insertion time point of the audio advertisement when playing the audio. The adjacent time period may comprise a time period before or after a time point.

For example, the predetermined insertion condition comprises: the change in amplitude of the waveform of the audio is smaller than a predetermined threshold in 15s before a time point. When the first determination means 1 analyzes that the change in amplitude of the waveform is smaller than the predetermined threshold in 15s before a time point in the audio, this time point is used as the insertion time point of the audio advertisement when playing the audio. In this example, the predetermined insertion condition may also be defined to adjust the selection of the insertion time point according to the human feature information of the audio, e.g., the insertion time point of news audio may be earlier, the insertion time point of cross talk audio may be later, etc.

It shall be noted that, in this implementation, if the audio is not a live audio, the first determination means 1 may execute the operation of implementation 1) before or after the network device provides the audio to the user equipment, or before or after knowing that the user equipment is playing the audio, that is, if the audio is not a live audio, the operation of implementation 1) may be executed off-line or may be executed in real time when the audio is played in the user equipment. If the audio is a live audio, implementation 1) generally needs to be executed in real time, and the first determination means 1 further comprises a judgment means (not shown in the figure) and a first sub-determination means (not shown in the figure): the judgment means judges whether it is suitable to insert the audio advertisement according to feature information of the live audio obtained by means of real-time analysis up to the current time point, and if it is judged that it is suitable to insert the audio ad, the first sub-determination means uses the current time point or a proximate time point after the current time point as the insertion time point.

The proximate time point is a time point which is after the current time point and proximate to the current time point. This proximate time point may be obtained by adding the current time point and a length of time, and this length of time may be predetermined, or may be determined by estimating network delay according to the network condition between the network device and the user equipment. Through this proximate time point, the possibility that the insertion time point has passed due to factors such as network delay when the user equipment receives the insertion time point sent by the provision means 2 can be reduced as much as possible.

The operation of the judgment means judging whether it is suitable to insert the audio advertisement according to feature information of the live audio obtained by means of real-time analysis up to the current time point can be executed repeatedly during the live broadcast of the audio until it is judged that it is suitable to insert the audio advertisement currently and the audio advertisement has already been inserted in the audio for a predetermined number of times, or the live broadcast of the audio is finished, and the method of the judgment means judging whether it is suitable to insert the audio advertisement according to feature information of the live audio obtained by means of real-time analysis up to the current time point is the same as or similar to the method as mentioned above of the first determination means 1 determining, merely according to the feature information of the audio into which the audio advertisement is inserted, the insertion time point of the audio advertisement when playing the audio, which will not be described here.
2) The first determination means 1 comprises a second sub-determination means (not shown in the figure). The second sub-determination means determines the insertion time point of the audio advertisement when playing the audio according to the feature information of the audio in combination with feature information of the audio advertisement and/or user attribute information of a user preferring the audio.

The audio advertisement comprises any advertisement which can be inserted into an audio and is manifested in the form of sound. The feature information of the audio advertisement comprises any information capable of reflecting the features of the audio ad. Preferably, the feature information of the audio advertisement comprises but is not limited to: inherent data feature information of the audio ad; human feature information of the audio advertisement and so on. The feature information of the audio advertisement is the same as or similar to the feature information of the audio, and the method for obtaining the feature information of the audio advertisement is the same as or similar to that for obtaining the feature information of the audio, so will not be described here.

The user attribute information of the user comprises any information capable of reflecting user attributes. Preferably, the user attribute information comprises but is not limited to: a) individual information of the user, comprising but not limited to gender, age, education level, etc. of the user; b) environment information of the current location of the user, comprising but not limited to time information of the user location, user location information, etc.; and c) an audio listening history of the user, this history comprising but not limited to the number of times the user listens to the audio in history, the list of audio heard, and the information of the environment for listening to the audio. The user individual information in the user attribute information may be provided actively by the user or obtained after identifying user identity according to user identification information, the user identification information may comprise but is not limited to login information of the user, identification information of the user equipment used by the user, etc.; the environment information of the current location of the user in the user attribute information may be provided by the user equipment or inferred according to the current address of the user; and the audio listening history in the user attribute information may be obtained after identifying the user identity according to the identification information of the user.

The user attribute information of the user preferring the audio may be obtained according to the user attribute information of the user listening to the audio historically. Preferably, an audio and user attribute model may be established according to the feature information of the audio and the user attribute information of the user listening to the audio historically, so as to establish an association between the audio and the user, so that a computer can query a user group to which an audio is targeted. For example, one entry in the audio and user attribute model may comprise: an audio identifier; an audio format-high bit rate aac; an art type-cross talk; a playback time-at noon; and a playback range-office building.

Specifically, the method of the second sub-determination means determining an insertion time point of the audio advertisement when playing the audio according to the feature information of the audio in combination with feature information of the audio advertisement and/or user attribute information of a user preferring the audio comprises but is not limited to:
a) the second sub-determination means selects, merely according to the feature information of the audio advertisement to be inserted and the feature information of the audio into which the audio advertisements is inserted, a time point at which feature information corresponding to an adjacent time period in the audio highly matches the feature information of the audio advertisement as the insertion time point of the audio advertisement when playing the audio.

For example, if the feature information of the audio advertisement indicates that it is a soothing music, and the second sub-determination means determines that the audio is soothing music one minute before and after 8:45, the time point of the audio, according to the feature information of the audio, the second sub-determination means uses the time point 8:45 as the insertion time point of the audio advertisement when playing the audio.
b) The second sub-determination means determines the insertion time point of the audio advertisement when playing the audio merely according to the feature information of the audio advertisement to be inserted and the user attribute information of the user preferring the audio.

For example, the second sub-determination means first selects, in the audio, a time range within which an audio advertisement may be inserted according to the user attribute information, and then determines the insertion time point within the selected time range according to the feature information of the audio. If the average length of time of the audio listened to by the user recorded in the user attribute information is 7:18 seconds, the second sub-determination means first determines that the time range in the audio within which the audio advertisement may be inserted is 0:00-7:18, and then determines the insertion time point within the selected time range according to the feature information of the audio.

As another example, the second sub-determination means first determines the time range in the audio within which the audio advertisement may be inserted according to the feature information of the audio, and then selects the insertion time point within the determined time range according to the user attribute information. If the second sub-determination means first determines a time range in the audio to which an audio portion having a volume lower than a predetermined volume threshold corresponds according to the feature information of the audio, and then judges that the user is in rush hour according to the current time information and location information of the user, an earlier time point is selected from the determined time range as the insertion time point.
c) The second sub-determination means determines the insertion time point of the audio advertisement when playing the audio according to the feature information of the audio, the feature information of the audio ad, and the user attribute information of the user preferring the audio.

For example, the second sub-determination means determines the time range in the audio which matches the audio advertisement and corresponding to an audio portion into which the audio advertisement can be inserted according to the feature information of the audio and the feature information of the audio ad, and then selects the insertion time point from the determined time range according to the user attribute information.

As another example, the second sub-determination means determines the time range in the audio within which the audio advertisement may be inserted according to the feature information of the audio and the user attribute information, and then selects the insertion time point from the determined time range according to the feature information of the audio ad.

It shall be noted that, similar to implementation 1), if the audio is not a live audio, the second sub-determination means may execute the operation of implementation 2) before or after providing the audio to the user equipment, or before or after knowing that the user equipment is playing the audio, that is, if the audio is not a live audio, the operation of implementation 2) may be executed off-line or may be executed in real time when the audio is played in the user equipment. If the audio is a live audio, implementation 2) generally needs to be executed in real time, and the second sub-determination means judges whether it is suitable to insert the audio advertisement according to feature information of the live audio obtained by means of real-time analysis up to the current time point in combination with the feature information of the audio advertisement and/or the user attribute information of the user preferring the audio, and if it is judged that it is suitable to insert the audio ad, uses the current time point or a proximate time point after the current time point as the insertion time point.

It shall be noted that, the examples above are merely used for illustrating the technical solutions of the present invention rather than limiting same, and those skilled in the art shall understand that any implementation for determining, according to feature information of audio into which an audio advertisement is inserted, an insertion time point of the audio advertisement when playing the audio shall be included in the scope of the present invention.

The provision means 2 provides to the user equipment the audio advertisement to be inserted in the audio, the insertion time point of the audio advertisement in the audio, and the instruction information, wherein the instruction information is used for instructing the user equipment to execute an operation associated with the insertion of the audio advertisement at the insertion time point.

The method of the provision means 2 providing the audio advertisement to the user equipment comprises but is not limited to: 1) the provision means 2 directly provides content information of the audio advertisement to the user equipment; and 2) the provision means 2 provides download link information of the audio advertisement to the user equipment, so as to allow the user equipment to download the audio ad.

Preferably, the operation associated with the insertion of the audio advertisement at the insertion time point comprises but is not limited to: 1) pausing the playback of the audio when the insertion time point is reached, and inserting the audio ad; and 2) displaying to the user prompt information that an audio advertisement can be inserted currently.

The instruction information sent by the provision means 2 is different according to different cases. Specifically:
1) in the case that the audio needs to be played in the user equipment, the instruction information is used for instructing the user equipment to pause the playback of the audio when the insertion time point is reached and inserting the audio ad.

Preferably, in this case, when the provision means 2 executes the operation, the audio may be played in the user equipment. Preferably, in this case, the user using the user equipment is generally the user to whom the audio advertisement is delivered. Furthermore, the instruction information may also further instruct the user equipment to resume playing the audio after the insertion of the audio advertisement is finished.
2) If the audio is a live audio, the instruction information is used for instructing the user equipment to display to the user prompt information that an audio advertisement can be inserted currently.

Preferably, in this case, the user using the user equipment is generally the live audio maker, comprising any staff involved in making this audio in real time and providing same to the public. Preferably, the maker comprises but is not limited to: the host for the live audio, the backstage crews for the live audio, etc.

It shall be noted that, the provision means 2 may also provide the audio to the user equipment at the same time. Alternatively, preferably, the audio is provided to the user equipment or played in the user equipment before the provision means 2 executes the operation; or when the audio is a live audio, this audio may be being recorded currently by the user using the user equipment.

It shall be noted that, there may be a long interval between the first determination means 1 and the provision means 2; and for example, if the audio is not a live audio, the first determination means 1 may first execute an operation and determine the insertion time point, and then after a period of time, when a request to play the audio is received from the user equipment or a notification of the audio being already played in the user equipment provided by another device is received, then the provision means 2 executes an operation. That is, in this case, the first determination means 1 executes an off-line operation. Alternatively, after the execution by first determination means 1, the provision means 2 may immediately execute an operation, for example, after the network device provides the audio to the user equipment or knows that the user equipment is playing the audio, the first determination means 1 executes an operation, and then the provision means 2 immediately executes an operation. That is, in this case, the first determination means 1 executes a real-time operation.

The audio ad, insertion time point and instruction information provided by the provision means 2 reach the user equipment via a network.

The receiving means 3 in the user equipment receives an audio advertisement provided by a network device and to be inserted into audio being played, an insertion time point of the audio advertisement when playing the audio, and instruction information.

The audio being played may comprise: 1) audio being played in the user equipment or to be played in the user equipment; and 2) an audio being recorded by a maker using the user equipment and played for the public.

The method of the receiving means 3 receiving the audio advertisement provided by the provision means 2 comprises but is not limited to: 1) the receiving means 3 directly receiving content information of the audio advertisement provided by the provision means 2; and 2) the receiving means 3 receiving download link information of the audio advertisement provided by the provision means 2 and downloading the audio ad.

Then, the execution means 4 executes an operation associated with the insertion of the audio advertisement at the insertion time point according to the instruction information.

The execution means 4 executes corresponding different operations according to different instruction information sent by the provision means 2 in different cases. Specifically:
1) the execution means 4 comprises a first sub-execution means (not shown in the figure). In the case that the audio is being played in the user equipment, the instruction information sent from the provision means 2 is used for instructing the user equipment to pause the playback of the audio when the insertion time point is reached and inserting the audio ad, and then the first sub-execution means pauses the playback of the audio when the insertion time point is reached and inserts the audio advertisement according to the instruction information.

Preferably, the user equipment further comprises a first playing means (not shown in the figure). In this case, if the audio is provided to the user equipment before the provision means executes an operation, then before the receiving means 3 executes an operation, the first playing means may acquire and play content information of the audio. The audio may be provided to the user equipment by the network device or another device, and the method for providing the audio is the same as or similar to the method for providing the audio ad, so will not be described here.
2) The execution means 4 comprises a second sub-execution means (not shown in the figure). In the case that the audio is a live audio, the instruction information is used for instructing the user equipment to display for the user prompt information that an audio advertisement can be inserted currently, and then the second sub-execution means displays for the user prompt information that an audio advertisement can be inserted currently according to the instruction information.

The case of displaying for the user, after the insertion time point, prompt information that an audio advertisement can be inserted currently may be generally caused by the fact that the insertion time point for the user equipment has passed when the receiving means 3 receives the information due to factors such as network delay. In this case, after the receiving means 3 receives the information, the second sub-execution means immediately displays prompt information that an audio advertisement can be inserted currently at the insertion time point or after the insertion time point.

Preferably, the user equipment further comprises a second playing means (not shown in the figure). In this case, when the user confirms insertion of the ad, the second playing means pauses the playback of the audio, and inserts the audio ad.

By means of the insertion solution of audio advertisements provided in this embodiment, an audio advertisement can be inserted into an audio at a suitable time point to reduce the incongruity of the audio ad, so as to enhance the user experience; moreover, this embodiment chooses to pause the playback of the original audio when the audio advertisement is inserted, rather than writing the audio advertisement into the audio, so that the audio advertisement can be played normally without modifying the original audio; furthermore, in this way, it is very simple to alter audio advertisements to better adapt to the needs of frequent alternation of audio advertisements (e.g., the inserted audio advertisements may be different for the same audio only after 5 minutes); furthermore, the solution of this embodiment can also provide the possibility of properly inserting audio advertisements in the case of live broadcast.

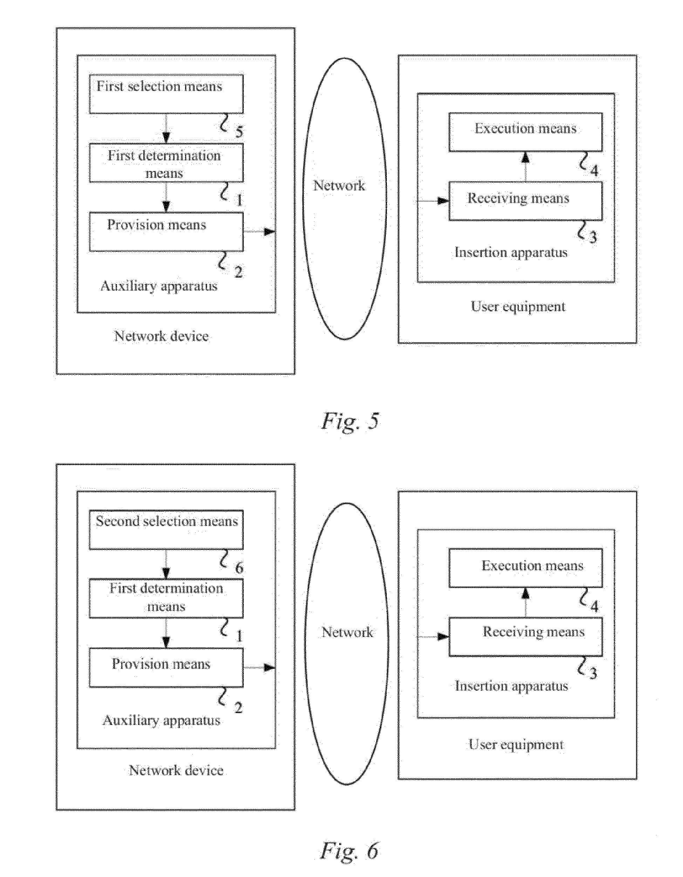

Fig. 5 is a structural schematic diagram of a system for inserting an audio advertisement according to another embodiment of the present invention. The system of this embodiment comprises a network device and a user equipment, wherein the network device comprises an auxiliary apparatus which comprises a first selection means 5, a first determination means 1 and a provision means 2, and the user equipment comprises an insertion apparatus which comprises a receiving means 3 and an execution means 4. The first determination means 1, the provision means 2, the receiving means 3 and the execution means 4 are all described in detail with reference to the embodiment as shown in Fig. 4, so will not be described here.

The first selection means 5 executes an operation before the first determination means 1. The first selection means 5 selects an audio advertisement to be inserted into an audio from a plurality of audio advertisements according to information associated with the advertisement insertion of the audio advertisement to be inserted into the audio.

The information associated with the advertisement insertion of the audio comprises any information associated with the audio and involving the insertion of the audio advertisement in the audio. Preferably, the information associated with the advertisement insertion of the audio comprises but is not limited to:

### 1) the number of ads allowed to be inserted in the audio.

When the information associated with the advertisement insertion of the audio comprises the number of ads allowed to be inserted in the audio, the first selection means 5 may randomly select, from a plurality of audio ads, audio advertisements in a number not exceeding the number of the ads allowed to be inserted, or randomly select, from a plurality of audio ads, audio advertisements in a number not exceeding the number of ads allowed to be inserted according to sorting of the audio ads.

### 2) Audio playback environment.

The audio playback environment comprises but is not limited to the playback time period of the audio and the coverage when playing the audio.

When the information associated with the advertisement insertion of the audio comprises the playback environment of the audio, the first selection means 5 may match the audio playback environment with the environment of the location or possible location of a user at whom a plurality of audio advertisements aim, so as to select, from a plurality of audio ads, an audio advertisement aiming at a user located in the environment highly matching the audio playback environment.

For example, if the audio playback environment comprises playing in an office building, the first selection means 5 may select, from a plurality of audio ads, an audio advertisement aiming at a user in the office building or a user possibly working in the office building (e.g., a user working on paperwork), etc.

### 3) User attribute information of a user preferring the audio.

When the information associated with the advertisement insertion of the audio comprises user attribute information of a user preferring the audio, the first selection means 5 may match the user attribute information of the user preferring the audio with user attribute information of a user at whom a plurality of audio advertisements aim, so as to select, from a plurality of audio ads, an audio advertisement aiming at a user highly matching the user preferring the audio.

For example, if most of the users preferring the audio are male, the first selection means 5 may select, from a plurality of audio ads, an audio advertisement aiming at men.

Preferably, the network device may obtain the user attribute information of the user preferring the audio through an established audio and user attribute model.

It shall be noted that, when the information associated with the advertisement insertion of the audio comprises a plurality of pieces of information, the first selection means 5 may synthesize the plurality of pieces of information to select an audio advertisement from a plurality of audio ads. For example, if the number of ads allowed to be inserted in the audio is 2, the audio playback environment comprises playing in an office building, and most of the users preferring the audio are male, the first selection means 5 selects, from a plurality of audio ads, two audio advertisements aiming at male users working in an office building or possibly working in an office building.

It shall be noted that, the examples above are merely used for illustrating the technical solutions of the present invention rather than limiting same, and those skilled in the art shall understand that any implementation of selecting, from a plurality of audio ads, an audio advertisement to be inserted into an audio according to information associated with the advertisement insertion of the audio advertisement to be inserted into the audio shall be included in the scope of the present invention.

In this embodiment, an audio advertisement may be selected according to information associated with the advertisement insertion of the audio advertisement to be inserted into an audio, so that the inserted audio advertisement is more congruous with the audio to further enhance the user experience.

Fig. 6 is a structural schematic diagram of a system for inserting an audio advertisement according to another embodiment of the present invention. The system of this embodiment comprises a network device and a user equipment, wherein the network device comprises an auxiliary apparatus which comprises a second selection means 6, a first determination means 1 and a provision means 2, and the user equipment comprises an insertion apparatus which comprises a receiving means 3 and an execution means 4. The first determination means 1, the provision means 2, the receiving means 3 and the execution means 4 are all described in detail with reference to the embodiment as shown in Fig. 4, so will not be described here.

The second selection means 6 executes an operation before the first determination means 1. The second selection means 6 selects, from a plurality of audio ads, an audio advertisement to be inserted into an audio according to feature information of the audio and feature information of each audio advertisement in the plurality of audio ads.

Specifically, the second selection means 6 selects, from a plurality of audio ads, an audio advertisement highly matching the audio as an audio advertisement to be inserted into an audio according to feature information of the audio and feature information of each audio advertisement in the plurality of audio ads.

The second selection means 6 may select an audio advertisement with feature information highly matching feature information of the whole audio, or may select an audio advertisement with feature information highly matching with feature information of part of the audio.

In this embodiment, an audio advertisement may be selected in combination with feature information of an audio and the audio ad, so that the inserted audio advertisement is more congruous with the audio to further enhance the user experience.

It shall be noted that, the first selection means 5 with reference to the embodiment as shown in Fig. 5 may be in combination with the second selection means 6 with reference to the embodiment as shown in Fig. 6. That is, an audio advertisement to be inserted into the audio may be selected from a plurality of audio advertisements according to information associated with the advertisement insertion of the audio in combination with the feature information of the audio and feature information of each audio advertisement in the plurality of audio ads.

For example, if the number of ads allowed to be inserted in the audio is 2, the playback environment of the audio comprises playing in an office building, most of the users preferring the audio are male, and the feature information of the audio reflects a small change in amplitude of the waveform of the audio, two audio advertisements which aim at male users working in an office building or possibly working in an office building and having a small change in amplitude of the waveform may be selected from a plurality of audio ads.

It shall be noted that, the present invention may be implemented in software and/or a combination of software and hardware, for example, each apparatus in the present invention may be implemented using an application-specific integrated circuit (ASIC) or any other similar hardware device. In an embodiment, the software programs of the present invention may be executed by a processor to implement the above steps or functions. Similarly, the software programs of the present invention (comprising relevant data structures) may be stored in a computer-readable recording medium, for example, a RAM, a magnetic or optical driver, a floppy disk, or a similar device. Furthermore, some steps or functions of the present invention may be implemented using hardware, for example, a circuit cooperating with a processor so as to execute each step or function.

For those skilled in the art, it is obvious that the present invention is not limited to the details of the above exemplary embodiments, and the present invention can be implemented by way of other embodiments without departing from the spirit or basic features of the present invention. Therefore, in any way, the embodiments shall be regarded as exemplary rather than limiting; the scope of the present invention is limited by the appended claims, instead of the above description. Thus, all variations which fall into the meaning and scope of equivalent elements of the claims shall be covered within the present invention. No reference signs in the claims shall be regarded as limiting the involved claims. Besides, it is obvious that the term "comprise" does not exclude other units or steps, and singularity does not exclude plurality. A plurality of units or means set forth in a system claim may also be implemented by a single unit or means through software or hardware. Terms such as first and second are used to indicate names, but do not indicate any particular sequence.

Obviously, those of skill in the art should understand that the embodiments of the present invention may be implemented by means of computer apparatus executable programs, thereby being able to store same in a storage apparatus to be executed by a processor. The programs may be stored in a computer readable storage medium. The storage medium mentioned above may be a read-only memory, a magnetic disk or an optical disc, etc.; or they are made into various integrated circuit modules respectively, or a plurality of modules or steps thereof are made into a single integrated circuit module. In this way, the present invention is not limited to any particular combination of hardware and software.

The following numbered paragraphs are also disclosed:
1. A method for assisting a user equipment to insert an audio advertisement in a network device, characterized in that the method comprises the steps of:
   - determining, according to feature information of audio into which said audio advertisement is inserted, an insertion time point of said audio advertisement when playing the audio; and
   - providing to said user equipment the audio advertisement to be inserted in said audio, said insertion time point, and instruction information, wherein said instruction information is used for instructing said user equipment to execute an operation associated with the insertion of said audio advertisement at said insertion time point.
2. The method according to paragraph 1, characterized in that said audio must be played in said user equipment, and said instruction information is used for instructing said user equipment to pause the playback of said audio when said insertion time point is reached and insert said audio ad.
3. The method according to paragraph 1, characterized in that said audio is a live audio, and said instruction information is used for instructing said user equipment to display to a user prompt information that an audio advertisement can be inserted currently.
4. The step according to paragraph 3, characterized in that the step of determining the insertion time point according to said feature information comprises:
   - judging whether it is suitable to insert said audio advertisement according to feature information of said live audio obtained by means of real-time analysis up to the current time point; and
   - when it is judged that it is suitable to insert said audio ad, using the current time point or a proximate time point after the current time point as said insertion time point.
5. The method according to paragraph 1, characterized in that the step of determining said insertion time point according to said feature information comprises:
   - determining the insertion time point of said audio advertisement when playing said audio according to said feature information of the audio in combination with feature information of said audio advertisement and/or user attribute information of a user preferring said audio.
6. The method according to any one of paragraphs 1 to 5, characterized in that the feature information of said audio comprises at least one of the following:
   - inherent data feature information of said audio; and
   - human feature information of said audio.
7. The method according to paragraph 6, characterized in that, before the step of determining said insertion time point according to said feature information, the method further comprises the steps of:
   - determining the data feature information of the audio according to said audio; and
   - determining the human feature information of said audio according to said data feature information.
8. The method according to any one of paragraphs 1 to 7, characterized in that, before the step of determining said insertion time point according to said feature information, the method further comprises the step of:
   - selecting an audio advertisement to be inserted into the audio from a plurality of audio advertisements according to information associated with the advertisement insertion of said audio.
9. The method according to any one of paragraphs 1 to 7, characterized in that, before the step of determining said insertion time point according to said feature information, the method further comprises the step of:
   - selecting an audio advertisement to be inserted into the audio from a plurality of audio advertisements according to the feature information of said audio and feature information of each audio advertisement in said plurality of audio ads.
10. A method for inserting an advertisement in a user equipment, characterized in that the method comprises the steps of:
   - receiving an audio advertisement provided by a network device and to be inserted into audio being played, an insertion time point of said audio advertisement when playing said audio, and instruction information; and
   - executing an operation associated with the insertion of said audio advertisement at said insertion time point according to said instruction information.
11. The method according to paragraph 10, characterized in that, said audio is being played in said user equipment, and the step of executing said operation according to said instruction information comprises:
   - pausing the playback of said audio when said insertion time point is reached and inserting said audio advertisement according to said instruction information.
12. The method according to paragraph 11, characterized in that, before said receiving step, the method further comprises the step of:
   - acquiring and playing content information of said audio.
13. The method according to paragraph 10, characterized in that said audio is a live audio, and the step of executing said operation according to said instruction information comprises:
   - at or after said insertion time point, displaying for a user prompt information that an audio advertisement can be inserted currently according to said instruction information.
14. The method according to paragraph 13, characterized in that, after the step of executing said operation according to said instruction information, the method further comprises the step of:
   - when said user confirms insertion of the ad, pausing the playback of said audio, and inserting said audio ad.
15. An auxiliary apparatus for assisting a user equipment to insert an audio advertisement in a network device, characterized in that the auxiliary apparatus comprises:
   a first determination means for determining, according to feature information of audio into which said audio advertisement is inserted, an insertion time point of said audio advertisement when playing said audio; and
   a provision means for providing to said user equipment the audio advertisement to be inserted in said audio, said insertion time point, and instruction information, wherein said instruction information is used for instructing said user equipment to execute an operation associated with the insertion of said audio advertisement at said insertion time point.
16. The auxiliary apparatus according to paragraph 15, characterized in that said audio must be played in said user equipment, and said instruction information is used for instructing said user equipment to pause the playback of said audio when said insertion time point is reached and insert said audio ad.
17. The auxiliary apparatus according to paragraph 15, characterized in that said audio is a live audio, and said instruction information is used for instructing said user equipment to display to a user prompt information that an audio advertisement can be inserted currently.
18. The auxiliary apparatus according to paragraph 17, characterized in that said first determination means comprises:
   a judgment means for judging whether it is suitable to insert said audio advertisement according to feature information of said live audio obtained by means of real-time analysis up to the current time point; and
   a first sub-determination means for using the current time point or a proximate time point after the current time point as said insertion time point when it is judged that it is suitable to insert said audio ad.
19. The auxiliary apparatus according to paragraph 15, characterized in that said first determination means comprises:
   a second sub-determination means for determining the insertion time point of said audio advertisement when playing said audio according to the feature information of said audio in combination with feature information of said audio advertisement and/or user attribute information of a user preferring said audio.
20. The auxiliary apparatus according to any one of paragraphs 15 to 19, characterized in that the feature information of said audio comprises at least one of the following:
   - inherent data feature information of said audio; and
   - human feature information of said audio.
21. The auxiliary apparatus according to paragraph 20, characterized in that the auxiliary apparatus further comprises the following means for executing operations before said first determination means:
   a second determination means for determining the data feature information of the audio according to said audio; and
   a third determination means for determining the human feature information of said audio according to said data feature information.
22. The auxiliary apparatus according to any one of paragraphs 15 to 21, characterized in that said auxiliary apparatus further comprises the following means for executing an operation before said first determination means:
   a first selection means for selecting an audio advertisement to be inserted into the audio from a plurality of audio advertisements according to information associated with the advertisement insertion of said audio.
23. The auxiliary apparatus according to any one of paragraphs 15 to 21, characterized in that the auxiliary apparatus further comprises the following means for executing an operation before said first determination means:
   a second selection means for selecting an audio advertisement to be inserted into the audio from a plurality of audio advertisements according to the feature information of said audio and feature information of each audio advertisement in said plurality of audio ads.
24. An insertion apparatus for inserting an advertisement in a user equipment, characterized in that the insertion apparatus comprises:
   a receiving means for receiving an audio advertisement provided by a network device and to be inserted into audio being played, an insertion time point of said audio advertisement when playing said audio, and instruction information; and
   an execution means for executing an operation associated with the insertion of said audio advertisement at said insertion time point according to said instruction information.
25. The insertion apparatus according to paragraph 24, characterized in that said audio is being played in said user equipment, and said execution means comprises:
   a first sub-execution means for pausing the playback of said audio when said insertion time point is reached and inserting said audio advertisement according to said instruction information.
26. The insertion apparatus according to paragraph 25, characterized in that the insertion apparatus further comprises the following means for executing an operation before said receiving means:
   a first playing means for acquiring and playing content information of said audio.
27. The insertion apparatus according to paragraph 24, characterized in that said audio is a live audio, and said execution means comprises:
   a second sub-execution means for displaying, at or after said insertion time point, for a user prompt information that an audio advertisement can be inserted currently according to said instruction information.
28. The insertion apparatus according to paragraph 27, characterized in that the insertion apparatus further comprises the following means for executing an operation after said execution means:
   a second playing means for pausing the playback of said audio, and inserting said audio ad, when said user confirms insertion of the ad.
29. A network device, comprising an auxiliary apparatus according to any one of paragraphs 15 to 23.
30. A user equipment, comprising an insertion apparatus according to any one of paragraphs 24 to 28.
31. A system, comprising a network device according to paragraph 29 and a user equipment according to paragraph 30.
32. A method for assisting user equipment to insert an audio advertisement in a network device, comprising:
   determining an insertion time point of the audio advertisement into audio content when playing the audio content based upon feature information about the audio content into which the audio advertisement is to be inserted; and
   providing the audio advertisement to be inserted in the audio content, an insertion time point, and instruction information,
   wherein the instruction information is used for instructing the user equipment to execute an operation associated with the insertion of the audio advertisement at the insertion time point.
33. The method of paragraph 32, wherein the audio content is played via the user equipment, and wherein the instruction information instructs the user equipment to pause playback of the audio content upon reaching the insertion time point and to insert the audio advertisement.
34. The method of paragraph 32, wherein the audio content includes live audio content, and wherein the instruction information instructs the user equipment to display prompt information that the audio advertisement can be inserted.
35. The method of paragraph 34, wherein said determining the insertion time point comprises:
   determining the insertion time point via real-time analysis of the live audio content; and
   inserting the audio advertisement into the live audio content based upon said determining the insertion time point.
36. The method of paragraph 32, wherein said determining the insertion time point comprises determining the insertion time point of the audio advertisement when playing the audio content according to said feature information about the audio in combination with at least one of feature information about the audio advertisement and user attribute information about a user preferring the audio content.
37. The method of paragraph 32, wherein the feature information about the audio content comprises at least one of the following:
   inherent data feature information about the audio content; and
   human feature information about the audio content.
38. The method of paragraph 37, further comprising:
   determining the data feature information about the audio content according to the audio content; and
   determining the human feature information about the audio content according to the data feature information,
   wherein said determining the data feature information and said determining the human feature information each occur before said determining the insertion time point.
39. The method of paragraph 32, further comprising selecting the audio advertisement from a plurality of audio advertisements according to information associated with the advertisement insertion of the audio content,
   wherein said selected the audio advertisement occurs before said determining the insertion time point.
40. The method of paragraph 32, further comprising selecting the audio advertisement from a plurality of audio advertisements according to the feature information about the audio content and feature information about each of the audio advertisements,
   wherein said selected the audio advertisement occurs before said determining the insertion time point.
41. A method for inserting an advertisement in a user equipment, comprising:
   receiving an audio advertisement provided by a network device and to be inserted into audio content being played, an insertion time point of the audio advertisement when playing said audio content, and instruction information; and
   executing an operation associated with the insertion of the audio advertisement at the insertion time point according to the instruction information.
42. The method of paragraph 41, wherein the audio content is played via the user equipment, and wherein said executing the operation comprises pausing playback of the audio content upon reaching the insertion time point and inserting the audio advertisement according to the instruction information.
43. The method of paragraph 42, further comprising acquiring and playing content information about the audio content, wherein said acquiring and playing the content information occurs before said receiving the audio advertisement.
44. The method of paragraph 41, wherein the audio content comprises live audio content, and wherein said executing the operation comprises presenting user prompt information indicating that the audio advertisement can be inserted according to the instruction information at the insertion time point.
45. The method of paragraph 44, further comprising:
   receiving user confirmation to insert the audio advertisement into the live audio content;
   pausing playback of the live audio content; and
   inserting the audio advertisement into the live audio content,
   wherein said receiving the user confirmation, said pausing playback of the live audio content, and said inserting the audio advertisement into the live audio content each occur after said executing the operation.
46. An auxiliary apparatus for assisting a user equipment to insert an audio advertisement in a network device, comprising:
   a first determination system for determining an insertion time point for inserting the audio advertisement into audio content based upon feature information about the audio content; and
   a provision system for providing to the user equipment the audio advertisement to be inserted in the audio content, the insertion time point, and instruction information,
   wherein the instruction information instructs the user equipment to execute an operation associated with the insertion of the audio advertisement at the insertion time point.
47. The auxiliary apparatus of paragraph 46, wherein the audio content is played via the user equipment, and wherein the instruction information instructs the user equipment to pause playback of the audio content upon reaching the insertion time point and to insert the audio advertisement.
48. The auxiliary apparatus of paragraph 46, wherein the audio content is a live audio, and wherein the instruction information instructs the user equipment to present user prompt information that the audio advertisement can be currently inserted.
49. The auxiliary apparatus of paragraph 46, wherein said first determination system comprises a second sub-determination system for determining the insertion time point of the audio advertisement based upon the feature information about the audio content and at least one of feature information about the audio advertisement and user attribute information.
50. The auxiliary apparatus of paragraph 46, wherein the feature information about the audio content comprises at least one of inherent data feature information about the audio content and human feature information about the audio content.
51. The auxiliary apparatus of paragraph 50, further comprising:
   a second determination system for determining the data feature information about the audio according to the audio content before said first determination system determines the insertion time point; and
   a third determination system for determining the human feature information about the audio content according to the data feature information before said first determination system determines the insertion time point.

## Claims

1. A method for assisting user equipment to insert an audio advertisement in a
network device, comprising:
determining an insertion time point of the audio advertisement into audio content when playing the audio content based upon feature information about the audio content into which the audio advertisement is to be inserted; and
providing the audio advertisement to be inserted in the audio content, an insertion time point, and instruction information,
wherein the instruction information is used for instructing the user equipment to execute an operation associated with the insertion of the audio advertisement at the insertion time point.

2. The method of claim 1, wherein the audio content is played via the user equipment, and wherein the instruction information instructs the user equipment to pause playback of the audio content upon reaching the insertion time point and to insert the audio advertisement.

3. The method of claim 1, wherein the audio content includes live audio content, and wherein the instruction information instructs the user equipment to display prompt information that the audio advertisement can be inserted.

4. The method of claim 3, wherein said determining the insertion time point comprises:
determining the insertion time point via real-time analysis of the live audio content; and
inserting the audio advertisement into the live audio content based upon said determining the insertion time point.

5. The method of claim 1, wherein said determining the insertion time point comprises determining the insertion time point of the audio advertisement when playing the audio content according to said feature information about the audio in combination with at least one of feature information about the audio advertisement and user attribute information about a user preferring the audio content.

6. The method of 1, wherein the feature information about the audio content comprises at least one of the following:
inherent data feature information about the audio content; and
human feature information about the audio content.

7. The method of claim 6, further comprising:
determining the data feature information about the audio content according to the audio content; and
determining the human feature information about the audio content according to the data feature information,
wherein said determining the data feature information and said determining the human feature information each occur before said determining the insertion time point.

8. The method of claim 1, further comprising selecting the audio advertisement from a plurality of audio advertisements according to information associated with the advertisement insertion of the audio content,
wherein said selected the audio advertisement occurs before said determining the insertion time point.

9. The method of claim 1, further comprising selecting the audio advertisement from a plurality of audio advertisements according to the feature information about the audio content and feature information about each of the audio advertisements,
wherein said selected the audio advertisement occurs before said determining the insertion time point.

10. A method for inserting an advertisement in a user equipment, comprising:
receiving an audio advertisement provided by a network device and to be inserted into audio content being played, an insertion time point of the audio advertisement when playing said audio content, and instruction information; and
executing an operation associated with the insertion of the audio advertisement at the insertion time point according to the instruction information.

11. The method of claim 10, wherein the audio content is played via the user equipment, and wherein said executing the operation comprises pausing playback of the audio content upon reaching the insertion time point and inserting the audio advertisement according to the instruction information.

12. The method of claim 11, further comprising acquiring and playing content information about the audio content, wherein said acquiring and playing the content information occurs before said receiving the audio advertisement.

13. The method of claim 10, wherein the audio content comprises live audio content, and wherein said executing the operation comprises presenting user prompt information indicating that the audio advertisement can be inserted according to the instruction information at the insertion time point.

14. The method of claim 13, further comprising:
receiving user confirmation to insert the audio advertisement into the live audio content;
pausing playback of the live audio content; and
inserting the audio advertisement into the live audio content,
wherein said receiving the user confirmation, said pausing playback of the live audio content, and said inserting the audio advertisement into the live audio content each occur after said executing the operation.

15. An auxiliary apparatus configured for assisting a user equipment to insert an audio advertisement in a network device according to any preceding method claim
